# EUROPÄISCHE PATENTANMELDUNG

(11) **EP 3 476 908 A1**
(43) Veröffentlichungstag der Anmeldung: **01.05.2019**
(21) Anmeldenummer: 18450009.8
(22) Anmeldetag: 25.10.2018
(51) Int. Cl.: C09D 11/50, C09D 11/033, C09D 11/03

(54) **SENSORTINTE, VERFAHREN ZUR HERSTELLUNG EINES FLUORESZENZSENSORS MIT DER SENSORTINE SOWIE SENSOR**

(30) Priorität: 30.10.2017 AT 4222017
(71) Anmelder: Technisches Farben Ges.b.R., 8074 Grambach (AT)
(72) Erfinder: Ribitsch, Iris Maria, 1210 Wien (AT); Pekari-Krottmaier, Claudia, 8301 Hart bei Graz (AT); Zehetner, Gerhard, 8020 Graz (AT); Krottmaier, Johannes, 8301 Hart bei Graz (AT)
(74) Vertreter: Cunow, Gerda

(57) **Zusammenfassung**

Bei einer Sensortinte zur quantitativen Erfassung von Komponenten in einer geschlossenen Verpackung / Container umfassend wenigstens einen Fluorophor, eine polymere Trägermatrix sowie wenigstens ein organisches Lösungsmittel ist als Trägermatrix ein Silizium-organisches System oder ein Homo- oder Co-Polymer gewählt aus der Gruppe Polystyrole, Polysulfone, Polyetherimide, Polyethersulfone, Polyvinylchlorid (PVC), Polyphenyenloxid (PPO), Polysulfonderivate, Polyethylenterephthalat, biobasierte Polymere, Polymilchsäure, Celluloseester und Celluloseether mit einem Molekulargewicht zwischen 80.000 und 300.000, vorzugsweise zwischen 100.000 und 240.000 enthalten und der Fluorophor liegt in einer Menge von 1,5 Gew.-% bis 7 Gew.-% bezogen auf die Polymerkonzentration vor, wobei die Trägermatrix und der Fluorophor mit dem organischen Lösungsmittel eine eine Viskosität zwischen 4 und 200 mPa's aufweisende Lösung ausbilden, sowie ein Verfahren zur Herstellung eines quantitativen Fluoreszenzsensors sowie Sensors.

## Beschreibung

Die vorliegende Erfindung bezieht sich auf eine Sensortinte zur quantitativen Erfassung von Komponenten in einer geschlossenen Verpackung / Container für einen Flexodruck oder Offsetdruck, umfassend wenigstens einen Fluorophor, eine polymere Trägermatrix sowie wenigstens ein organisches Lösungsmittel sowie ein Verfahren zur Herstellung eines Fluoreszenzsensors unter Verwendung der Sensortinte und einen derart hergestellten Sensor.

Fluoreszenz- oder Lumineszenzsensoren, welche zur Messung von Gaskonzentrationen im Inneren von beispielsweise Lebensmittelverpackungen oder Pharmazeutika zum Einsatz gelangen, sind seit einiger Zeit bekannt und werden insbesondere dafür eingesetzt, um festzustellen, ob beispielsweise die Verpackung dicht zu ist oder ob die in der Verpackung enthaltenen Produkte bereits verdorben sind und nicht mehr verwendet werden können. Da gleichzeitig die Zahl der bereits vorverpackten, insbesondere gasdicht verpackten Produkte, welche in den Handel gelangen, stetig ansteigt und beispielsweise auf dem Lebensmittelsektor Wurst, Käse oder Fleisch nahezu ausschließlich bereits in verpackter Form verkauft werden, ist es sowohl für den Hersteller als auch für den Konsumenten von immer größerer Bedeutung, unmittelbar feststellen zu können, ob die verpackten Produkte noch genießbar sind, ob die Verpackungen dicht zu sind bzw. den Hygieneanforderungen Genüge getan ist.

Es wurden daher in letzter Zeit Verfahren entwickelt, mit welchen Sensoren auf der Innenseite von Verpackungen aufgebracht werden können, welche Sensoren in der Folge entweder berührungslos oder durch Kontaktieren der Folie mit dem Auslesedetektor dahingehend ausgelesen werden können, dass je nach emittierten Strahlen bzw. nicht emittierten Strahlen unmittelbar erkannt werden kann, ob die im Inneren der Verpackung enthaltenen Produkte in Ordnung sind, beispielsweise ob der Sauerstoffgehalt im Inneren der Verpackung zu hoch ist, was auf eine undichte Verpackung hindeutet, oder dgl.

Derartige Sensoren, welche üblicherweise aus in einer Polymermatrix enthaltenen Lumineszenz- bzw. Fluoreszenzfarbestoffen bestehen, wurden bzw. werden auf die Innenseite der Folie mittels spezieller Druckverfahren, wie beispielsweise Siebdruck oder Sputtern, aufgebracht, wodurch Sensorpunkte bzw. -muster auf der Innenseite der Verpackung erhalten wurden. Die Sensoren weisen eine relativ große Dicke von etwa 40 µm auf und benötigen neben dem übermäßig großen Verbrauch an Polymer und Fluoreszenz- bzw. Lumineszenzfarbstoff auch eine lange Zeit zum Trocknen, so dass diese Sensoren in einem kontinuierlichen Verfahren, insbesondere in der Massenproduktion, kaum zum Einsatz gelangen können, da die Langsamkeit des Herstellungsverfahrens und insbesondere die großen bzw. dicken gebildeten Sensorpunkte sich als nachteilig erwiesen haben.

Aus der WO 98/18871 A1 ist eine Tinte für ein Tintenstrahldruck entnehmbar, welche neben einem organischen Lösungsmittel, einem darin löslichen Polymer und einem darin löslichen organischen Elektrolyten auch eine Mehrzahl von Fluorophoren enthält, welche in einer Tinten für den Tintenstrahldruck einsetzbar sind.

Der US 4,186 020 A ist ebenfalls eine fluoreszierende Drucktinte entnehmbar, welche für den Einsatz im Tintenstrahldruck geeignet ist und welche im ultravioletten Licht emittiert und einen löslichen organischen Phosphor, lösliche organische Aufheller sowie lösliche fluoreszierende Farbkomponenten und ein Bindemittel enthält. Eine Angabe über die Viskosität dieser Tinte ist dem Dokument nicht zu entnehmen.

Es besteht somit nach wie vor ein Bedürfnis zur Ausbildung eines Sensors bzw. einer Sensortinte, mit welcher es gelingt, extrem dünne Sensorpunkte auf Kunststofffolien auszubilden, welche dünnen Sensorpunkte jedoch ausreichend hohe Konzentrationen an Fluoreszenz- bzw. Luminszenzfarbstoff enthalten, um diese zweifelsfrei und sicher auslesen zu können, und andererseits welche Sensorpunkte so rasch getrocknet werden können, dass sie bei Verlassen des Druckers bereits in getrocknetem Zustand vorliegen. Schließlich muss ein Herstellungsverfahren derartiger Sensoren auf gängigen Massendruckmedien, wie Flexodruck oder Offsetdruck umsetzbar sein, um eine ausreichende Anzahl von Sensoren für Massengüter zur Verfügung stellen zu können.

Die Erfindung zielt daher darauf ab, eine derartige Sensortinte, welche den obigen Anforderungen genügt und quantitative Messungen ermöglicht, zur Verfügung zu stellen, ebenso wie ein Verfahren zur Herstellung eines Fluoreszenzsensors unter Einsatz einer derartigen Sensortinte sowie einen Sensor, welcher unter Einsatz einer derartigen Sensortinte ausgebildet wurde.

Zur Lösung der Aufgabe ist die erfindungsgemäße Sensortinte im Wesentlichen dadurch gekennzeichnet, dass als Trägermatrix ein Silizium-organisches System oder ein Homo- oder Co-Polymer gewählt aus der Gruppe Polystyrole, Polysulfone, Polyetherimide, Polyethersulfone, Polyvinylchlorid (PVC), Polyphenylenoxid (PPO), Polysulfonderivate, Polyethylenterephthalat, biobasierte Polymere wie z.B. Polymilchsäure, Celluloseester und Celluloseether mit einem Molekulargewicht zwischen 80.000 und 300.000, vorzugsweise zwischen 100.000 und 240.000 enthalten ist, dass der Fluorophor in einer Menge von 1,0 Gew.-% bis 7 Gew.-% bezogen auf die Polymerkonzentration vorliegt und dass die Trägermatrix und der Fluorophor mit dem organischen Lösungsmittel eine eine Viskosität zwischen 15 und 200 mPa˙s, insbesondere 20 bis 70 mPa's aufweisende Lösung ausbilden. Indem als Trägermaterial für die Sensortinte ein Silizium-organisches System oder ein Homo- oder Copolymer gewählt aus der Gruppe Polystyrole, Polysulfone, Polyetherimide, Polyethersulfone, Polyvinylchlorid (PVC), Polyphenyenloxid (PPO), Polysulfonderivate, Polyolefine, Polyethylenterephthalat, biobasierte Polymere, Polymilchsäure, Celluloseester und Celluloseether mit einem Molekulargewicht zwischen 80.000 und 300.000, vorzugsweise zwischen 100.000 und 240.000 enthalten ist, gelingt es, eine Basis für den aus der Sensortinte ausgebildeten Sensor zur Verfügung zu stellen, welcher nach Aufbringen auf beispielsweise eine Kunststofffolie deformierbar ist und auch bei übermäßiger Bewegung der Folie, beispielsweise eines Verpackungsmaterials, auf welches ein derartiger Sensorpunkt aufgebracht ist, nicht bricht bzw. sich von dem Verpackungsmaterial ablöst. Ein aus diesem Polymer bzw. Copolymer gebildeter Sensor ist flexibel, elastisch und haftet gut auf verschiedensten Kunststoffoberflächen. Der Sensor kann jedoch auch auf nicht- oder wenig deformierbaren, transparenten oder semitransparenten Materialien wie z.B. Glasgebinden oder relativ starren Kunststoffgebinden verwendet werden.

Indem weiterhin der Fluorophor in der polymeren Matrix in der Menge von 1,5 Gew.-% bis 7 Gew.-% bezogen auf die Polymerkonzentration vorliegt, gelingt es, ausreichende Mengen an Fluorophor in die Sensortinte zu integrieren, um bei Ausbildung eines Sensors aus dieser Tinte ein reproduzierbares Signal messen zu können, welches nicht zu schwach ist und insbesondere keine fehlerhaften Interpretationen zulässt. Hierbei ist die Polymerkonzentration im Wesentlichen so gewählt, dass ein von einem Detektor empfangenes Fluoreszenzsignal um wenigstens den Faktor 5 größer ist als das Untergrundsignal. Wenn die Konzentration des Fluorophors in der Sensortinte unter 1,0 Gew.-% sinkt, kann ein ausreichend starkes Fluoreszenz- bzw. Lumineszenzsignal des Sensors nicht mehr garantiert werden und wenn der Gehalt über 7 Gew.-% bezogen auf die Polymerkonzentration ansteigt, kann nicht verhindert werden, dass sich eine Aggregation bzw. Akkumulation von einzelnen Sensormolekülen und ein Verklumpen derselben im Inneren eines aus der Sensortinte gemäß der Erfindung zusammengeballten Sensor entsteht, wodurch es zu einer Selbstauslöschung eines Fluoreszenz- bzw. Lumineszenzsignals kommen kann, wodurch Messergebnisse ungenau und insbesondere nicht repräsentativ werden können.

Indem weiterhin neben der Trägermatrix und dem Fluorophor ein organisches Lösungsmittel enthalten ist, mit welchem die Viskosität der Sensortinte auf einen Wert zwischen 15 und 200 mPa's eingestellt wird, gelingt es, eine gut druckbare Tinte herzustellen, welche insbesondere in Massendruckverfahren einsetzbar ist, bei welchen es erforderlich ist, dass die zum Einsatz gelangenden Tinten dünnflüssig sind und insbesondere nach Aufbringen extrem rasch trocknen, wobei das Lösungsmittels so gewählt sein muss, dass es rückstandsfrei trocknet und Sensoren mit extrem kleinen Schichtdicken von wenigen µm wie beispielsweise 1 - 10 µm ermöglicht.

Bei dem Massendruckverfahren, wie Flexodruck oder Offsetdruck ist es üblicherweise erforderlich, die Viskosität der Lösung etwas höher einzustellen als bei Tintenstrahldruck, um diskrete und reproduzierbare Sensorpunkte herstellen zu können. Auch bei diesen Druckverfahren ist es wesentlich, die Viskosität der Lösung derart einzustellen, dass ein Verrinnen bzw. ein Verlaufen der einzelnen Punkte derselben bzw. ein Fadenziehen während des Drucks hintangehalten werden können, um immer reproduzierbare Ergebnisse zu erzielen, in welchen die Menge an Fluorophor, welche in einem einzelnen Sensorpunkt enthalten ist, reproduzierbar ist, um auch entsprechend reproduzierbare Ergebnisse zu erhalten.

Der Begriff Sensortinte, wie er in der vorliegenden Anmeldung verwendet wird, umfasst jede Lösung besteht aus einem Polymer, einem Fluorophor und einem niedrig siedenden Lösungsmittel unabhängig von dem Faktum, ob es sich bei dieser Lösung um eine gefärbte oder nicht gefärbte Lösung handelt. Einziges Kriterium ist, dass die in dieser Sensortinte enthaltenen Fluorophormoleküle zur Abgabe eines Fluoreszenz- bzw. Lumineszenzlichts angeregt werden können und in der Sensortinte molekular gelöst vorliegen.

Indem, wie dies einer Weiterbildung der Erfindung entspricht, die Sensortinte so ausgebildet ist, dass der darin enthaltene Fluorophor gewählt ist aus der Gruppe Metall-Porphyrine, Phenanthrolinkomplexe, wie Diphenylphenantrolin, Ruthenium(II)-Komplexe, Fluorescein-Derivate, Coumarin-Derivate und Phenylmethanfarbstoffe. Dadurch, dass der Fluorophor aus der oben genannten Gruppe gewählt ist bzw. aus Derivaten dieser Gruppe, insbesondere verschiedenen Derivaten der Metalloporphyrine, gelingt es, eine Sensortinte zur Verfügung zu stellen, in welcher auch große Konzentrationen von etwa 3 bis 7 % des Fluorophors in gelöster Form in der Polymermatrix vorliegen und welcher Fluorophor insbesondere nicht dazu neigt, Aggregate zu bilden bzw. nach Herstellung eines Sensor zur Selbstauslöschung neigt.

Durch Einsatz der organischen Lösungsmittel gewählt aus der Gruppe Methylethylketon, Chloroform, Ethylacetat oder fluorierte organische Verbindungen wie z.B. Octofluortoluol, die derart gewählt sind, um das jeweilige Matrixpolymer lösen zu können, gelingt es, eine Sensortinte herzustellen, bei welcher die Viskosität exakt auf die für ein Massendruckverfahren, wie Flexodruck oder Offsetdruck einstellbar ist, herzustellen. Darüber hinaus sind derartige Lösungsmittel so gewählt, dass es einen Siedepunkt von unter 100 °C aufweist, so dass ein gesondertes Trocknungsverfahren für den Sensor nach seinem Aufbringen auf die Trägerfolie nicht erforderlich ist, sondern der Sensor bereits im Inneren des Druckaggregats/der Druckmaschine in der hierfür vorgesehenen Trockenstrecke vollständig getrocknet wird, d.h. das Lösungsmittel abdampft. Darüber hinaus gewährleisten derartige organische Lösungsmittel, dass sie bei ihrer Verdunstung eine homogene Oberfläche zurücklassen und gleichmäßig abdampfen, wodurch ein homogener Sensor, in welchem die Fluorophormoleküle auch in der getrockneten Form als diskrete Moleküle, welche ausreichende Abstände voneinander aufweisen, vorliegen, um bei Verwendung des Sensors nicht zu einer Selbstlöschung zu neigen sondern ein starkes reproduzierbares Signal ergeben, erreichbar ist.

Insbesondere, um eine Selbstauslöschung des Fluorophors bzw. der angeregten Fluorophormoleküle bei einer Messung mit Sicherheit hintanzuhalten, ist die Sensortinte gemäß der vorliegenden Erfindung im Wesentlichen dahingehend weitergebildet, dass der Fluorophor in der Polymerlösung molekular gelöst vorliegt. Eine derartige molekulare Lösung kann nur durch ein exaktes Zusammenwirken des gewählten Polymers bzw. Homo- oder Copolymers und des gewählten Lösungsmittels erreicht werden und insbesondere müssen das Polymer und das Lösungsmittel so gewählt werden, dass nicht nur in Lösung der Fluorophor molekular gelöst vorliegt und die Fluorophormoleküle voneinander beabstandet sind, sondern auch nach Trocknen eines Sensorpunkts auf der Trägerfolie. Hierbei muss sichergestellt sein, dass eine Migration der Fluorophormoleküle in der Trägermatrix nicht stattfindet und dass auch eine Bildung von Agglomeraten nicht stattfinden kann, um eine immer gleichbleibende, reproduzierbare Messung zu gewährleisten, welche lediglich von der Konzentration des Fluorophors in dem Polymer sowie der Schichtdicke desselben abhängt.

Unter dem Begriff molekular gelöst wird verstanden, dass die Fluorophormoleküle in der Polymerlösung und in dem erstarrten Polymer als diskrete Einzelmoleküle vorliegen und keine Agglomerate, keine Addukte und dgl. gebildet werden.

Hierfür ist es günstig, dass, wie dies einer Weiterbildung der Erfindung entspricht, die Sensortinte so ausgebildet ist, dass ihre Elastizität in einem visko-elastischen System, ausgedruckt als G' bei Frequenzen ≤ 50 Hz kleiner als der Betrag des Viskositätswertes ist, ausgedruckt als G". Bei Einstellung einer derartigen Elastizität kann gewährleistet werden, dass ein Verdrucken ohne Fadenbildung erfolgt und dass ein mit dieser Sensortinte ausgebildeter Sensorpunkt ausreichend elastisch ist, um den Bewegungen der Trägerfolie zu folgen, ohne dass ein Brechen oder Ablösen desselben erfolgt. Um ein Ablösen weiterhin zu vermeiden, können die Oberflächeneigenschaften der Folien, auf welche derartige Sensoren gedruckt werden, beispielsweise durch eine Coronabehandlung verbessert werden.

Eine derartige Sensortinte ist zur Herstellung von Fluoreszenzsensoren mittels Massendruckverfahren geeignet, wobei gemäß der Erfindung ein Verfahren zur Herstellung eines derartigen Fluoreszenzsensors im Wesentlichen dadurch gekennzeichnet ist, dass es die folgenden Schritte umfasst:
a) Herstellen einer Sensortinte nach einem der Ansprüche 1 bis 7 durch Vermischen sämtlicher Bestandteile unter Rühren, bis eine homogene Lösung gebildet wird,
b) Aufbringen der Sensortinte mittels eines Massendruckverfahrens auf eine mittels Wärme versiegelbare, eine Oberflächenspannung von > 36 N/m² aufweisenden Kunststofffolie bzw. ein Kunststoffgebinde oder ein Glasgebinde,
c) Abdampfen des in der Sensortinte enthaltenen Lösungsmittels in einer Druckereinrichtung, und
d) gegebenenfalls Aufrollen der mit der Sensortinte bedruckten Kunststofffolie zu Rollen.

Mit dem erfindungsgemäßen Verfahren gelingt es erstmals, eine Sensortinte mittels Massendruckverfahren, d.h. z.B. Flexodruck oder Offsetdruck auf eine Kunststofffolie bzw. ein Kunststoffgebinde oder ein Glasgebinde aufzubringen, wobei nicht nur das Aufbringen der Sensortinte auf die Folie gelingt, sondern insbesondere ermöglicht wird, dass aufgrund der spezifischen Zusammensetzung der Sensortinte das in der Tinte enthaltene Lösungsmittel in der Trockenstrecke des Druckeraggregats abdampft bzw. verdampft wird und mit extrem hohen Druckgeschwindigkeiten ein Sensor bzw. eine Vielzahl von eine sehr geringe Dicke aufweisenden Sensoren gebildet werden können, die unmittelbar zur weiteren Verwendung zur Verfügung stehen.

Um das Abdampfen des Lösungsmittels im Inneren des Druckers sicher und vollständig und insbesondere in der kurzen Zeit, welche eine Folie braucht, um über die Trocknerstrecke des Druckers transportiert zu werden, zu gewährleisten, ist das Verfahren dahingehend weitergebildet, dass das Abdampfen des Lösungsmittels im Inneren des Druckers bei einer im Drucker vorliegenden Temperatur < 90 °C durchgeführt wird. Bei der Abdampftemperatur unter 90 °C wird sichergestellt, dass die gewählten oben genannten Lösungsmittel, nämlich Methylethylketon, Ethylacetat, Chloroform oder fluorierte organische Verbindungen mit Sicherheit schnell abgedampft werden, ohne dass Rückstände zurückbleiben und ohne dass der gebildete Sensor Unregelmäßigkeiten, insbesondere Oberflächenrauigkeiten aufweist bzw. eine Agglomeration des in dem Sensor enthaltenen Fluorophors stattfindet.

Eine derartige Tinte kann insbesondere in einem Flexodruck- oder Offsetdruckverfahren zum Drucken der Tinte auf einer Kunststofffolie oder einem Kunststoff- oder Glasgebinde eingesetzt werden. Mit den bis dato bekannten Tinten war die Durchführung eines derartigen Verfahrens nicht möglich und insbesondere bestand auch ein Vorurteil dahingehend, dass es nicht möglich sei, eine derartig rasche Trocknung des Sensormaterials zu erreichen, dass ein Massendruckverfahren ausgeführt werden könne, da ansonsten die einzelnen Folienseiten bzw. Umdrehungen einer Rolle oder die vereinzelten Kunststoff- oder Glasgebinde aufeinander kleben würden, die Sensoren dabei zerstört würden oder abgerissen werden könnten.

Besonders geeignet für die Durchführung des Verfahren gemäß der vorliegenden Erfindung haben sich hierbei, wie dies einer Weiterbildung der Erfindung entspricht, Folien gewählt aus der Gruppe Polysulfone (PS), Polypropylen (PP), Polyethylen (PE), Polyamid (PA), Polyethylenterephthalat inkl. BioPolymere, wie Polymilchsäure (PLA), Polyethylenterephthalat (BioPET), Cellophane) erwiesen. Derartige Folien sind ausreichend flexibel um bedruckt zu werden, haben eine ausreichende Temperaturstabilität, um nicht während des Druckens verschlechtert zu werden und können thermoversiegelt werden, um daraus beispielsweise Lebensmittelverpackungen oder Medizinproduktverpackungen herzustellen.

Um insbesondere das Verfahren zur Herstellung von Fluoreszenzsensoren einzusetzen, welche zum quantitativen Nachweis beispielsweise des Sauerstoffgehalts in Verpackungen bzw. zum Nachweis, ob eine Verpackung dicht versiegelt ist, eingesetzt werden können, wird gemäß einer bevorzugten Weiterbildung des Verfahrens die Kunststofffolie so ausgewählt, dass sie eine hohe Sauerstoffbarrierewirkung besitzt. Insbesondere können hierbei Folien eingesetzt werden, die eine Sauerstoffdurchlässigkeit kleiner 10 cm³/m²/Tag/Atm aufweisen.

Die Erfindung betrifft schließlich einen Sensor, insbesondere Fluoreszenzsensor, der mittels eines Verfahrens der vorliegenden Erfindung hergestellt wird und im Inneren einer mittels einer Kunststofffolie versiegelbaren Verpackung oder eines Gefäßes ausgebildet wurde. Ein derartiger Sensor ist im Wesentlichen dadurch gekennzeichnet, dass der Fluorophor in der Polymermatrix als diskretes Farbstoffmolekül in einer Menge von 2 bis 5 Gew.-% der Polymermatrix vorliegt und eine Dicke von weniger als 6 µm aufweist. Sensoren mit einer derartig geringen Dicken konnten mit den herkömmlichen Druckverfahren, wie beispielsweise Siebdruckverfahren, nicht hergestellt werden, insbesondere gelang es nicht, gleichzeitig eine ausreichend Konzentration des Fluorophors in dem Sensormaterial zur Verfügung zu stellen und einen extrem dünnen Sensor auszubilden. Erst durch Auswahl der Polymermatrix der vorliegenden Erfindung und des Lösungsmittels sowie des Aufbringverfahrens der Sensortinte auf eine Kunststofffolie gemäß der vorliegenden Erfindung gelingt es, Sensoren mit derartig geringen Schichtdicken und gleichzeitig großen Konzentrationen an Fluorophor herzustellen. Ein derartiger Sensor kann gemäß der vorliegenden Erfindung mittels Massendruckmedien, wie Flexodruck oder Offsetdruck auf die Trägerfolien aufgebracht werden, so dass sie für eine Massenproduktion geeignet sind.

Eine mit dem Verfahren der Erfindung hergestellte erfindungsgemäße Drucklösung enthält 16 - 20 Gew.-% Polymer und 80 bis 85 Gew.-% des Lösungsmittels. Mit einer derartigen Drucklösung können Sensoren mit Dicken zwischen 1,5 und 5 µm, vorzugsweise 2 bis 3 µm erhalten werden.

## Patentansprüche

1. Sensortinte zur quantitativen Erfassung von Komponenten in einer geschlossenen Verpackung / Container für einen Flexodruck oder Offsetdruck, umfassend wenigstens einen Fluorophor, eine polymere Trägermatrix sowie wenigstens ein organisches Lösungsmittel, **dadurch gekennzeichnet, dass** als Trägermatrix ein Silizium-organisches System oder ein Homo- oder Co-Polymer gewählt aus der Gruppe Polystyrole, Polysulfone, Polyetherimide, Polyethersulfone, Polyvinylchlorid (PVC), Polyphenylenoxid (PPO), Polysulfonderivate, Polyethylenterephthalat, biobasierte Polymere, Polymilchsäure, Celluloseester und Celluloseether mit einem Molekulargewicht zwischen 80.000 und 300.000, vorzugsweise zwischen 100.000 und 240.000 enthalten ist, dass der Fluorophor in einer Menge von 1,0 Gew.-% bis 7 Gew.-% bezogen auf die Polymerkonzentration vorliegt und dass die Trägermatrix und der Fluorophor mit dem organischen Lösungsmittel eine eine Viskosität zwischen 15 und 200 mPa·s, insbesondere 20 bis 70 mPa·s aufweisende Lösung ausbilden.

2. Sensortinte nach Anspruch 1, **dadurch gekennzeichnet, dass** der Fluorophor gewählt ist aus der Gruppe: Metall-Porphyrine, Phenanthrolinkomplexe, wie Diphenylphenantrolin, Ruthenium(II)-Komplexe, Fluorescein-Derivate, Coumarin-Derivate und Phenylmethanfarbstoffe.

3. Sensortinte nach Anspruch 1 oder 2, **dadurch gekennzeichnet, dass** das organische Lösungsmittel gewählt ist aus der Gruppe: Methylethylketon, Chloroform, Ethylacetat oder fluorierte organische Verbindungen.

4. Sensortinte nach Anspruch 1, 2 oder 3, **dadurch gekennzeichnet, dass** der Fluorophor in der Polymerlösung molekular gelöst vorliegt.

5. Sensortinte nach einem der Ansprüche 1 oder 4, **dadurch gekennzeichnet, dass** ihre Elastizität in einem visko-elastischen System, ausgedruckt als G' bei Frequenzen ≤ 50 Hz kleiner als der Betrag des Viskositätswertes ist, ausgedruckt als G".

6. Verfahren zur Herstellung eines Fluoreszenzsensors, **dadurch gekennzeichnet, dass** es die folgenden Schritte umfasst:
a) Herstellen einer Sensortinte nach einem der Ansprüche 1 bis 5 durch Vermischen sämtlicher Bestandteile unter Rühren, bis eine homogene Lösung gebildet wird,
b) Aufbringen der Sensortinte mittels eines Massendruckverfahrens auf eine mittels Wärme versiegelbare, eine Oberflächenspannung von > 36 N/m² aufweisenden Kunststofffolie bzw. ein Kunststoffgebinde oder ein Glasgebinde,
c) Abdampfen des in der Sensortinte enthaltenen Lösungsmittels, und
d) gegebenenfalls Aufrollen der mit der Sensortinte bedruckten Kunststofffolie zu Rollen.

7. Verfahren nach Anspruch 6, **dadurch gekennzeichnet, dass** das Abdampfen des Lösungsmittels im Inneren des Druckers bei einer im Drucker vorliegenden Temperatur < 90 °C durchgeführt wird.

8. Verfahren nach Anspruch 6 oder 7, **dadurch gekennzeichnet, dass** die Sensortinte durch ein Verfahren gewählt aus Flexodruck oder Offsetdruck auf die Kunststofffolie, Kunststoff- oder Glasgebinde aufgebracht wird.

9. Verfahren nach einem der Ansprüche 6, 7 oder 8, **dadurch gekennzeichnet, dass** die zu bedruckende Folie gewählt wird aus der Gruppe: Polysulfone (PS), Polypropylen (PP), Polyethylen (PE), Polyamid (PA), Polyethylenterephthalat inkl. BioPolymere, wie Polymilchsäure (PLA), Polyethylenterephthalat (BioPET), Cellophane).

10. Verfahren nach Anspruch 9, **dadurch gekennzeichnet, dass** eine Kunststofffolie mit hoher Sauerstoffbarrierewirkung bzw. einer Sauerstoffdurchlässigkeit von kleiner 10 cm³/m²/Tag/Atm eingesetzt wird.

11. Sensor, insbesondere Fluoreszenzsensor, hergestellt mittels eines Verfahrens nach einem der Ansprüche 6 bis 9 auf einer mittels Wärme versiegelbaren Kunststofffolie oder Kunststoffgebinde oder einem Glasgebinde, **dadurch gekennzeichnet, dass** der Fluorophor in der Polymermatrix als diskrete Farbstoffmoleküle in einer Menge von 2 bis 5 Gew.-% der Polymermatrix vorliegt.

12. Sensor nach Anspruch 11, **dadurch gekennzeichnet, dass** eine Schichtdecke einer getrockneten Sensortinte auf der Kunststofffolie kleiner 6 µm, insbesondere kleiner 5 µm ist.
